# EUROPEAN PATENT APPLICATION

(11) **EP 4 835 281 A1**
(43) Date of publication of application: **04.11.2026**
(21) Application number: 26176102.7
(22) Date of filing: 01.05.2026
(51) Int. Cl.: F02C 7/32, F02K 5/00

(54) **AIRCRAFT HYBRID ELECTRIC PROPULSION SYSTEM**

(30) Priority: 02.05.2025 US 202519197714
(71) Applicant: Pratt & Whitney Canada Corp., Longueuil, Québec J4G 1A1 (CA)
(72) Inventor: BRITO, Roberto, (01BE5) Longueuil, J4G 1A1 (CA)
(74) Representative: Dehns

(57) **Abstract**

A hybrid-electric propulsion (HEP) system (20) for powering an aircraft is provided that includes a gearbox (26), a gas turbine engine (22), and an accessory device. The gearbox (26) includes an input shaft (46), an output shaft (52), a drive gear (50), a layshaft assembly (48), an accessory device pad (58) and a planetary gear arrangement (54). The gas turbine engine (22) is in drive communication with the input shaft (46) of the gearbox (26). The accessory device is engaged with the accessory device pad (58). The layshaft assembly (48) includes a layshaft (68), a first layshaft gear (64), and a second layshaft gear (66). The first and second layshaft gears (64, 66) are attached to the layshaft (68). The first layshaft gear (64) is engaged with the input shaft (46) and the second layshaft gear (66) is engaged with the drive gear (50). The planetary gear arrangement (54) is engaged with the drive gear (50). The accessory device is mounted to the accessory device pad (58) and is engaged with the planetary gear arrangement (54).

## Description

### BACKGROUND OF THE INVENTION

### 1. Technical Field

The present invention relates to aircraft propulsion systems in general, and to aircraft hybrid-electric propulsion systems in particular.

### 2. Background Information

A hybrid electric propulsion ("HEP") system for an aircraft includes a thermal engine (e.g., a gas turbine engine) and at least one electric motor for providing motive force for an aircraft. The electric motor can be situated to provide rotational drive to the thermal engine or to a gearbox. High gear reduction within a gearbox for an accessory device has historically been accomplished by adding multiple stages of reduction. These multiple stages of reduction require additional space and can undesirably increase the housing envelope of the gearbox housing. In addition, the multiple stages of reduction can also produce rotational direction difficulties.

### SUMMARY

According to an aspect of the present invention, a hybrid-electric propulsion (HEP) system for powering an aircraft is provided that includes a gearbox, a gas turbine engine, and an accessory device. The gearbox includes an input shaft, an output shaft, a drive gear, a layshaft assembly, an accessory device pad, and a planetary gear arrangement. The gas turbine engine is in drive communication with the input shaft of the gearbox. The accessory device is engaged with the accessory device pad. The layshaft assembly includes a layshaft, a first layshaft gear, and a second layshaft gear. The first and second layshaft gears are attached to the layshaft. The first layshaft gear is engaged with the input shaft and the second layshaft gear is engaged with the drive gear. The planetary gear arrangement is engaged with the drive gear. The accessory device is mounted to the accessory device pad and is engaged with the planetary gear arrangement.

Optionally, and in accordance with the above, the accessory device may be an electric motor that is controllable to provide rotational drive into the planetary gear arrangement.

Optionally, and in accordance with any of the above, the accessory device may be an electric generator that is controllable to be driven by the planetary gear arrangement and thereby produce electrical energy.

Optionally, and in accordance with any of the above, the accessory device may be an electric motor that is disposable in an electric motor configuration operable to provide rotational drive into the planetary gear arrangement and is disposable in an electric generator configuration that is driven by the planetary gear arrangement and thereby produces electrical energy.

Optionally, and in accordance with any of the above, the gearbox may include a second accessory device pad, and the HEP system may include a second electric motor engaged with the second accessory device pad. The second electric motor may be disposable in a second electric motor configuration operable to provide rotational drive into a second planetary gear arrangement and may be disposable in a second electric generator configuration that is driven by the second planetary gear arrangement and thereby produces electrical energy.

Optionally, and in accordance with any of the above, the planetary gear arrangement may be disposable in a first configuration wherein a shaft of the accessory device rotates in a first rotational direction and disposable in a second configuration wherein the shaft of the accessory device rotates in a second rotational direction, wherein the second rotational direction is opposite the first rotational direction.

Optionally, and in accordance with any of the above, the planetary gear arrangement may include a sun gear, a plurality of planet gears, a ring gear and a planet gear carrier. The sun gear may be engaged with a shaft of the accessory device.

Optionally, and in accordance with any of the above, the ring gear may be rotationally fixed and the planet gear carrier may be engaged with a pinion gear that is engaged with the drive gear.

Optionally, and in accordance with any of the above, the drive gear may be engaged with the output shaft.

Optionally, and in accordance with any of the above, the planet gear carrier may be rotationally fixed and the ring gear may be engaged with a pinion gear that is engaged with the drive gear.

Optionally, and in accordance with any of the above, the drive gear may be engaged with the output shaft.

According to another aspect of the present invention, a hybrid-electric propulsion (HEP) system for powering an aircraft is provided that includes a gearbox and a gas turbine engine. The gearbox includes an input shaft, an output shaft, a drive gear, a layshaft assembly, an accessory device pad, and a planetary gear arrangement. The gas turbine engine is in drive communication with the input shaft of the gearbox. The layshaft assembly includes a layshaft, a first layshaft gear, and a second layshaft gear. The first and second layshaft gears are attached to the layshaft. The first layshaft gear is engaged with the input shaft and the second layshaft gear is engaged with the drive gear. The planetary gear arrangement is engaged with the drive gear. The planetary gear arrangement is disposed to permit engagement with an accessory device mounted to the accessory device pad.

Optionally, and in accordance with any of the above, the gearbox may include a second accessory device pad and a second planetary gear arrangement. The second planetary gear arrangement may be disposed to permit engagement with a second accessory device mounted to the second accessory device pad.

Optionally, and in accordance with any of the above, the planetary gear arrangement may be configured to be driven in a first rotational direction or in a second rotational direction, wherein the second rotational direction is opposite the first rotational direction.

Optionally, and in accordance with any of the above, the planetary gear arrangement may include a sun gear, a plurality of planet gears, a ring gear and a planet gear carrier. The sun gear may be disposed for engagement with a shaft of the accessory device.

Optionally, and in accordance with any of the above, the ring gear may be rotationally fixed and the planet gear carrier may be engaged with a pinion gear that is engaged with the drive gear, and the drive gear may be engaged with the output shaft.

Optionally, and in accordance with any of the above, the planet gear carrier may be rotationally fixed and the ring gear may be is engaged with a pinion gear that is engaged with the drive gear, and the drive gear may be engaged with the output shaft.

According to another aspect of the present invention, a gearbox for use in an aircraft hybrid-electric propulsion (HEP) system is provided that includes an input shaft, an output shaft, a drive gear, a layshaft assembly, an accessory device pad, and a first planetary gear arrangement. The layshaft assembly includes a layshaft, a first layshaft gear, and a second layshaft gear. The first layshaft gear and the second layshaft gear are attached to the layshaft. The first layshaft gear is engaged with the input shaft and the second layshaft gear is engaged with the drive gear. The first planetary gear arrangement is engaged with the drive gear and is disposed for drive communication with an accessory device mounted on the accessory device pad.

Optionally, and in accordance with the above, the gearbox may include a second accessory device pad and a second planetary gear arrangement, and the second planetary gear arrangement may be disposed to permit engagement with a second accessory device mounted to the second accessory device pad.

Optionally, and in accordance with any of the above, the first planetary gear arrangement may include a sun gear, a plurality of planet gears, a ring gear and a planet gear carrier. The ring gear may be rotationally fixed and the planet gear carrier is engaged with a pinion gear that is engaged with the drive gear, or the planet gear carrier may be rotationally fixed and the ring gear is engaged with a pinion gear that is engaged with the drive gear.

The foregoing features and elements may be combined in various combinations without exclusivity, unless expressly indicated otherwise. For example, aspects and/or embodiments of the present invention may include any one or more of the individual features or elements disclosed above and/or below alone or in any combination thereof. These features and elements as well as the operation thereof will become more apparent in light of the following description and the accompanying drawings. The following description and drawings are intended to be exemplary in nature and non-limiting.

### BRIEF DESCRIPTION OF THE DRAWINGS

FIG. 1 is a diagrammatic view of a present invention hybrid-electric propulsion system embodiment.
FIG. 2 is a diagrammatic view of a present invention hybrid-electric propulsion system embodiment.
FIG. 3 is a diagrammatic view of a present invention gearbox embodiment.
FIG. 3A is a diagrammatic view of a present invention gearbox embodiment.
FIG. 4 is a diagrammatic representation of a planetary gear arrangement.
FIG. 5 is a diagrammatic representation of a gear box having accessory pads with multiple stages of reduction.
FIG. 6 is a diagrammatic representation of a present invention gear box embodiment.

### DETAILED DESCRIPTION

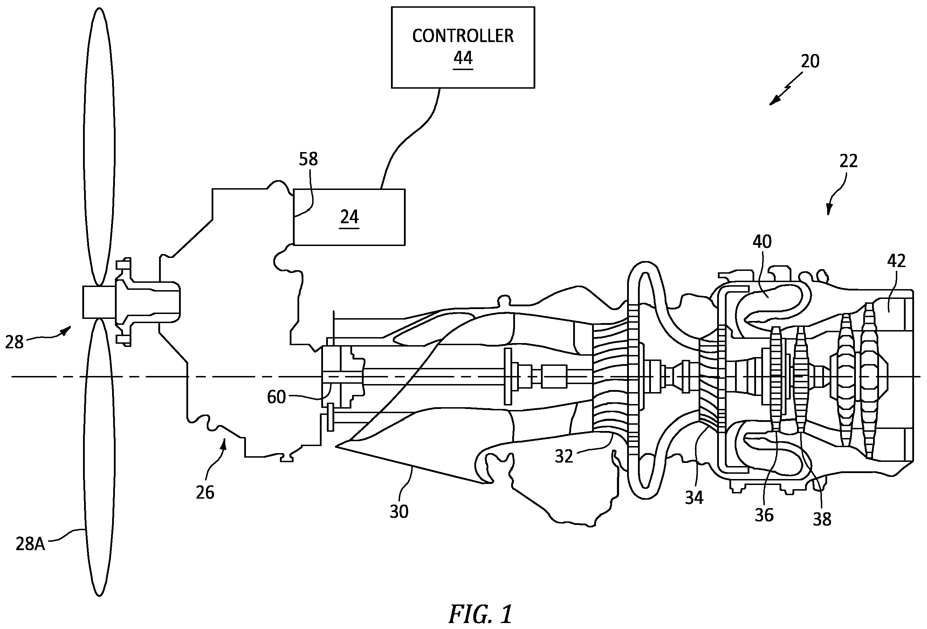

FIG. 1 is a diagrammatic view of an aircraft hybrid-electric propulsion (HEP) system 20 that includes a gas turbine engine 22, an electric motor 24, a gearbox 26, and a propulsion unit 28.

The gas turbine engine 22 includes an inlet duct 30, a low pressure compressor 32, a high pressure compressor 34, a high pressure turbine 36, a low pressure turbine 38, and a combustor 40. The gas turbine engine 22 also includes a power turbine 42. The present invention is not limited to the gas turbine engine 22 shown in FIG. 1 and may be used with other gas turbine engine configurations. The gas turbine engine 22 is in communication with the gearbox 26 and the gearbox 26 is in communication with the propulsion unit 28. The propulsion unit 28 shown in FIG. 1 includes a propeller 28A. The present invention is not limited to use with a propulsion unit 28 that includes a propeller 28A.

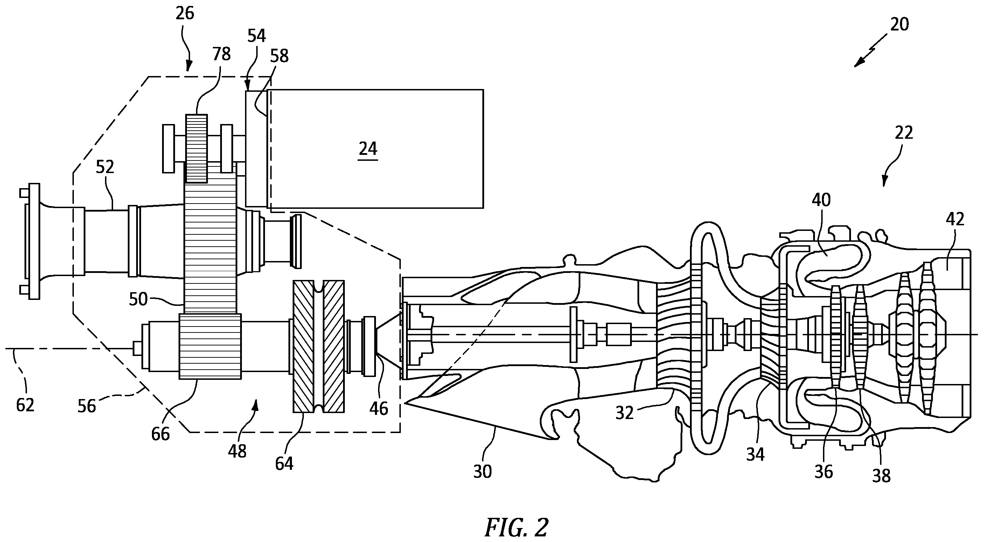

The terms "forward" and "aft" are used herein to indicate the relative position of a component or surface. As core gas air passes through the gas turbine engine 22 diagrammatically shown in FIGS. 1 and 2, the compressor sections 32, 34 are "forward" of the turbine sections 36, 38 and the power turbine 42 is "aft" of the turbine sections 36, 38. The terms "upstream" and "downstream" used herein refer to the direction of a gas flow passing through a gas path of the turbine engine 22. It should also be noted that the terms "radial" and "circumferential" are used herein with respect to the rotational axis of the turbine engine 22.

The electric motor 24 may be an alternating current (AC) motor that can be controlled to rotationally drive a component, or can be controlled to produce electrical energy; i.e., function as an electrical generator. In some embodiments, the present invention may include components associated with the operation of the electric motor 24, including one or more of an electrical energy storage device (e.g., a battery - not shown), a battery electrical management system (not shown), or an electric motor controller (not shown).

FIG. 1 diagrammatically illustrates the present invention HEP system 20 including a controller 44. The term "controller" as used herein refers to a device that may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the present invention system (or a system component) to accomplish the same algorithmically and/or coordination of system components. The controller 44 may include or may be in communication with one or more memory devices. The present invention is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The present invention is not limited to any particular controller architecture unless specifically stated herein. A non-limiting example of a HEP system 20 device that functions as a controller 44 or incorporates a controller 44 is a FADEC. Other devices (e.g., an electric motor controller, which may include an inverter, rectifying circuits, and the like) may also include a controller, and the various controllers may be in communication with one another to accomplish the functionality described herein. The present invention is not limited to any particular controller architecture.

The gearbox 26 may be configured as a reduction gearbox that accepts an input rotational drive at a first rotational speed (S1) and at a first torque (T1) and produces an output rotational drive at a second rotational speed (S2) and at a second torque (T2), wherein the first rotational speed is greater than the second rotational speed (S1 > S2) and the second torque is greater than the first torque (T2 > T1).

The present invention gearbox 26 diagrammatically shown in FIGS. 1 and 2 includes an input shaft 46, a layshaft assembly 48, a drive gear 50, an output shaft 52, a planetary gear arrangement 54 (see FIG. 2), a housing 56, and an accessory pad 58. In some embodiments, the gearbox 26 may include a second layshaft assembly (not shown).

The gearbox input shaft 46 (and an attached input shaft gear - not shown) is directly or indirectly engaged with, and is driven by, the gas turbine engine 22. An example of a gearbox input shaft 46 that is directly engaged with the gas turbine engine 22 is one wherein the gearbox input shaft 46 is connected to an engine shaft and rotates at the same speed as the engine shaft. An example of a gearbox input shaft 46 that is indirectly engaged with the gas turbine engine 22 is one wherein the gearbox input shaft 46 and the engine shaft are both connected to a gear arrangement (not shown) and the engine shaft and gearbox input shaft 46 rotate at different rotational speeds. In the gas turbine engine 22 shown in FIG. 1, a shaft 60 extending from the power turbine 42 is an example of an engine shaft that may be directly or indirectly engaged with the gearbox input shaft 46.

Referring to FIG. 2, the layshaft assembly 48 is disposed along a layshaft rotational axis 62 and includes a first gear 64 and a second gear 66 mounted on a layshaft 68. The first gear 64 is engaged with the gearbox input shaft 46. The second gear 66 is engaged with the drive gear 50. The drive gear 50 is engaged with the output shaft 52. The relative diameters of the gearbox input shaft gear, the first gear 64, the second gear 66, and the drive gear 50 may be chosen to create a multi-stage gear reduction. Hence, rotational drive from the gas turbine engine 22 is supplied to the input shaft 46, and the input shaft 46 transfers the rotational drive to the first gear 64. The rotational drive is subsequently transferred to the drive gear 50 via the second gear 66, and the drive gear 50 transfers the rotational drive to the output shaft 52. In those embodiments that include a second layshaft assembly, the second layshaft assembly may be configured the same as or similar to the layshaft assembly 48 described above.

The accessory pad 58 is configured to permit an accessory device (e.g., an electric motor 24, an electric generator, or the like) to engage with the gearbox 26; e.g., be mounted to the housing of the gearbox 26. As will be detailed herein, the accessory pad 58 is configured to engage the accessory device with a planetary gear arrangement 54 associated with (e.g., disposed internally within) the gearbox 26. As will be detailed herein, embodiments of the gearbox 26 may include more than one accessory pad 58 and may include more than one planetary gear arrangement 54.

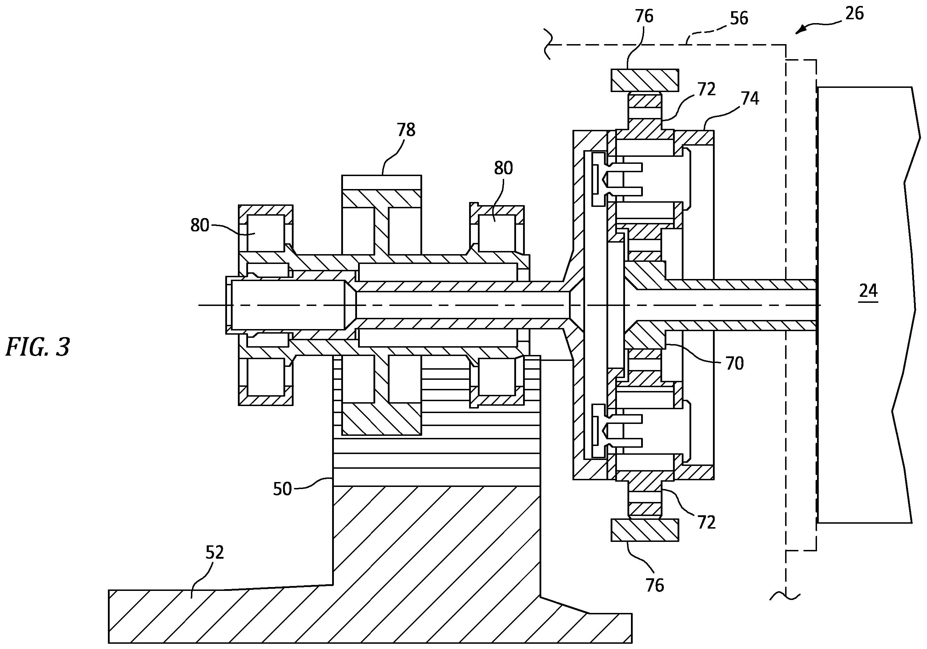

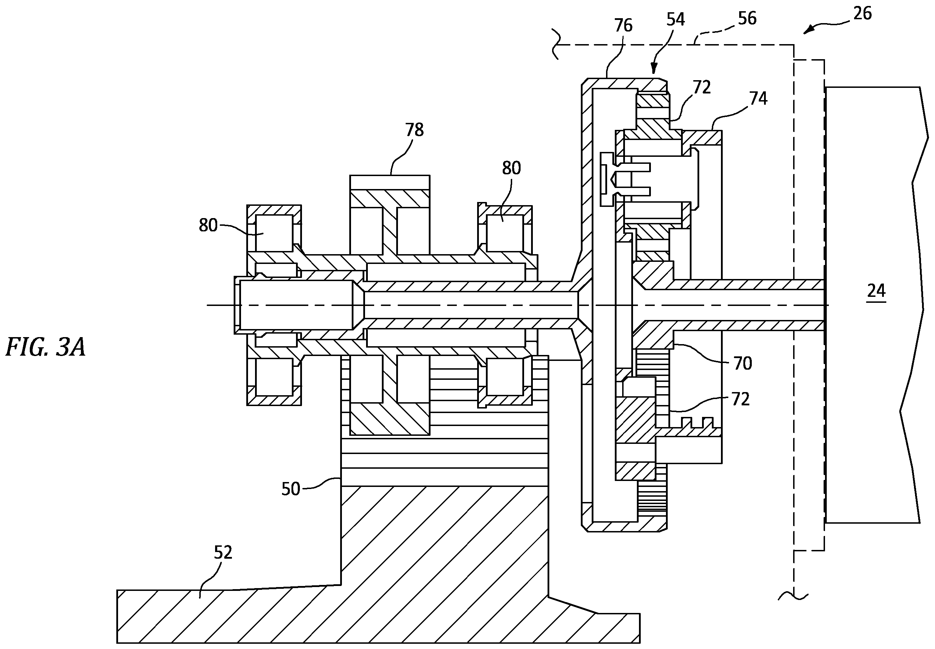

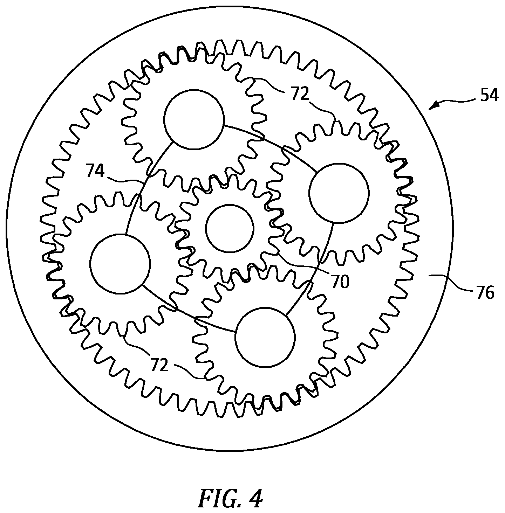

FIG. 3 is a diagrammatic side view illustrating the accessory device (e.g., an electric motor 24, an electric generator, or the like) mounted to the gearbox 26. An input shaft of the accessory device is diagrammatically shown engaged with the planetary gear arrangement 54. The planetary gear arrangement 54 includes a sun gear 70, a plurality of planet gears 72, a carrier 74, and a ring gear 76. FIG. 4 is a diagrammatic illustration of the planetary gear arrangement 54. In this example, the planetary gear arrangement 54 includes four (4) planet gears 72. Embodiments of the planetary gear arrangement 54 may include fewer or more than four planet gears 72. The sun gear 70 is centrally disposed and is in toothed engagement with each of the planet gears 72. The carrier 74 is attached to each of the planet gears 72 and each of the planet gears 72 is in toothed engagement with the ring gear 76. The relative gear diameters of the planet gears 72 and the sun gear 70 create the gear ratio / gear reduction of the planetary gear arrangement 54. In a first configuration (as shown in FIG. 3), the planetary gear arrangement 54 is configured such that the ring gear 76 is rotationally fixed and the carrier 74 rotates with the planet gears 72. In the first configuration, the carrier 74 is engaged with a pinion gear 78 (i.e., the carrier 74 and the pinion gear 78 rotate together) and the pinion gear 78 is in toothed engagement with the output shaft 52 of the gearbox 26. FIG. 3 illustrates the pinion gear 78 rotationally supported by a pair of bearings 80. In the first configuration, the carrier 74 rotates in a first direction (e.g., clockwise) and the ring gear is fixed. In a second configuration (as shown in FIG. 3A), the planetary gear arrangement 54 is configured such that the ring gear 76 rotates and the carrier 74 is rotationally fixed. In this configuration, the ring gear 76 is engaged with the pinion gear 78 (i.e., the ring gear 76 and the pinion gear 78 rotate together) and the pinion gear 78 is in toothed engagement with the output shaft 52 of the gearbox 26. In the second configuration, the ring gear 76 rotates in a second direction, opposite the first direction (e.g., counterclockwise), and the carrier 74 does not rotate. Hence, the planetary gear arrangement 54 allows the accessory device shaft to rotate in opposite directions with the same gear arrangement "footprint".

The present invention is not limited to use with any particular accessory device. As stated above, an example of an accessory device that may be used is an electric motor 24 that can be controlled to operate as an electric motor or as an electric generator. When operated as an electric motor, the device can be controlled to produce rotational drive that may be input into the output shaft 52 of the gearbox 26. When operated as an electric generator, the device can be driven to produce electrical power that may be utilized within the aircraft and/or may be stored within a storage device such as a battery.

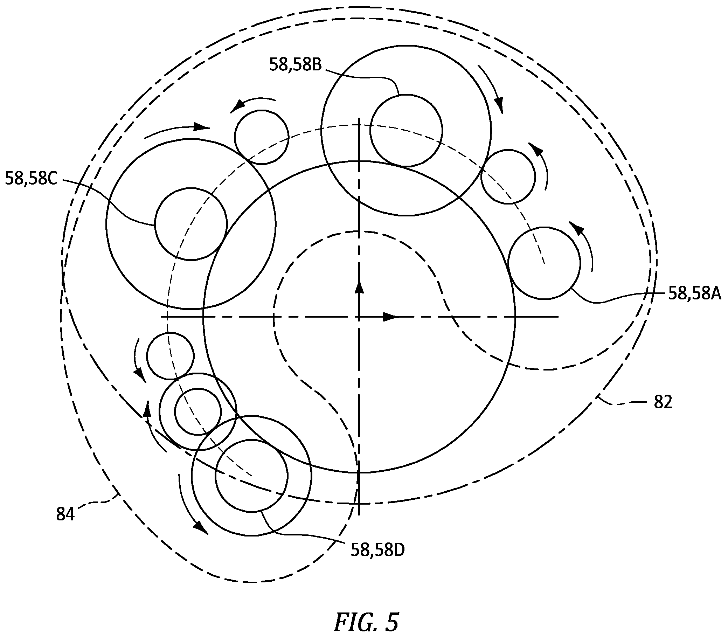

The gear box 26 arrangement of the present invention can provide several benefits. FIG. 5 diagrammatically illustrates an aircraft nacelle loft line 82 and the housing envelope 84 of a gearbox 26; e.g., either a reduction gearbox or an accessory gearbox. This example diagrammatically shows gear arrangements associated with a first accessory pad 58A, a second accessory pad 58B, a third accessory pad 58C, and a fourth accessory pad 58D. The second and third gear arrangements associated with the second and third accessory pads 58B, 58C are each shown as having a two stage gear reduction. As can be seen, the gears within the two stage gear reduction are shown side by side, in toothed engagement. It should be noted that each gear within the two stage gear reduction rotates opposite the other gear within the two stage gear reduction. The gear arrangement associated with the fourth accessory pad 58D is shown as having a three stage gear reduction. In this arrangement, the central gear will rotate in a direction opposite the other two gears.

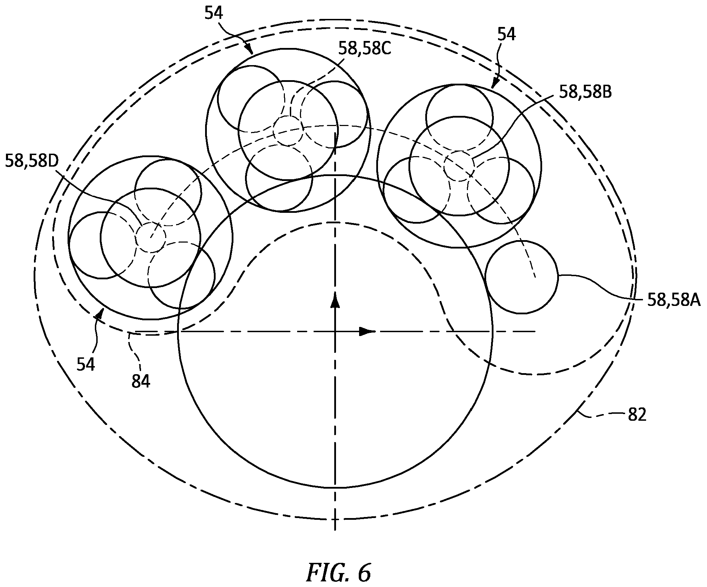

FIG. 6 diagrammatically illustrates an aircraft nacelle loft line 82 and the housing envelope 84 of a gearbox 26 (e.g., either a reduction gearbox or an accessory gearbox) according to a present invention embodiment. This example diagrammatically shows gear arrangements associated with a first accessory pad 58A, a second accessory pad 58B, a third accessory pad 58B, and a fourth accessory pad 58C. In this example, the second, third, and fourth gear arrangements are each shown as having a planetary gear arrangement 54.

As can be seen from the examples shown in FIGS. 5 and 6, the present invention gearbox 26 embodiment having planetary gear arrangements 54 may utilize an appreciably smaller footprint because of the more space efficient gear reduction provided by each planetary gear arrangement 54. Importantly, it is understood that a gearbox 26 according to the present invention (i.e., with planetary gear arrangements 54 for accessory devices) may permit the utilization of multiple accessory devices (i.e., more than one electric motor / generator) within an existing gearbox 26 footprint that has been limited to fewer such devices. In addition, the rotational direction of any of the planetary gear arrangement 54 can be readily switched simply by fixing the ring gear 76 and rotating the carrier 74, or vice versa. Under the present invention gearbox 26 configurations, there is no need to add yet another stage of reduction to change rotational direction.

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this invention by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present invention is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the inventions may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the inventions--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present invention are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A hybrid-electric propulsion, HEP, system (20) for powering an aircraft, the HEP system (20) comprising:
a gearbox (26) that includes an input shaft (46), an output shaft (52), a drive gear (50), a layshaft assembly (48), an accessory device pad (58), and a planetary gear arrangement (54);
a gas turbine engine (22) in drive communication with the input shaft (46) of the gearbox (26); and
an accessory device engaged with the accessory device pad (58);
wherein the layshaft assembly (48) includes a layshaft (68), a first layshaft gear (64), and a second layshaft gear (66), wherein the first layshaft gear (64) and the second layshaft gear (66) are attached to the layshaft (68), and the first layshaft gear (64) is engaged with the input shaft (46) and the second layshaft gear (66) is engaged with the drive gear (50);
wherein the planetary gear arrangement (54) is engaged with the drive gear (50); and
wherein the accessory device is mounted to the accessory device pad (58) and is engaged with the planetary gear arrangement (54).

2. The HEP system (20) of claim 1, wherein the accessory device is an electric motor (24) that is controllable to provide rotational drive into the planetary gear arrangement (54).

3. The HEP system (20) of claim 1 or 2, wherein the accessory device is an electric generator that is controllable to be driven by the planetary gear arrangement (54) and thereby produce electrical energy.

4. The HEP system (20) of any preceding claim, wherein:
the accessory device is an electric motor (24) that is disposable in an electric motor configuration operable to provide rotational drive into the planetary gear arrangement (54) and is disposable in an electric generator configuration that is driven by the planetary gear arrangement (54) and thereby produces electrical energy; and/or
the planetary gear arrangement (54) is disposable in a first configuration wherein a shaft of the accessory device rotates in a first rotational direction and disposable in a second configuration wherein the shaft of the accessory device rotates in a second rotational direction, wherein the second rotational direction is opposite the first rotational direction.

5. The HEP system (20) of any preceding claim, wherein the gearbox (26) includes a second accessory device pad (58), and the HEP system (20) further comprises a second electric motor (24) engaged with the second accessory device pad (58), wherein the second electric motor (24) is disposable in a second electric motor configuration operable to provide rotational drive into a second planetary gear arrangement (54) and is disposable in a second electric generator configuration that is driven by the second planetary gear arrangement (54) and thereby produces electrical energy.

6. The HEP system (20) of any preceding claim, wherein the planetary gear arrangement (54) includes a sun gear (70), a plurality of planet gears (72), a ring gear (76) and a planet gear carrier (74), and wherein the sun gear (70) is engaged with a shaft of the accessory device.

7. The HEP system (20) of claim 6, wherein the ring gear (76) is rotationally fixed and the planet gear carrier (74) is engaged with a pinion gear (78) that is engaged with the drive gear (50), and wherein, optionally, the drive gear (50) is engaged with the output shaft (52).

8. The HEP system (20) of claim 6, wherein the planet gear carrier (74) is rotationally fixed and the ring gear (76) is engaged with a pinion gear (78) that is engaged with the drive gear (50), and wherein, optionally, the drive gear (50) is engaged with the output shaft (52).

9. A hybrid-electric propulsion, HEP, system (20) for powering an aircraft, the HEP system (20) comprising:
a gearbox (26) that includes an input shaft (46), an output shaft (52), a drive gear (50), a layshaft assembly (48), an accessory device pad (58), and a planetary gear arrangement (54); and
a gas turbine engine (22) in drive communication with the input shaft (46) of the gearbox (26);
wherein the layshaft assembly (48) includes a layshaft (68), a first layshaft gear (64), and a second layshaft gear (66), wherein the first layshaft gear (64) and the second layshaft gear (66) are attached to the layshaft (68), and the first layshaft gear (64) is engaged with the input shaft (46) and the second layshaft gear (66) is engaged with the drive gear (50);
wherein the planetary gear arrangement (54) is engaged with the drive gear (50); and
wherein the planetary gear arrangement (54) is disposed to permit engagement with an accessory device mounted to the accessory device pad (58).

10. The HEP system (20) of claim 9, wherein:
the gearbox (26) includes a second accessory device pad (58) and a second planetary gear arrangement (54), wherein the second planetary gear arrangement (54) is disposed to permit engagement with a second accessory device mounted to the second accessory device pad (58); and/or
the planetary gear arrangement (54) is configured to be driven in a first rotational direction or in a second rotational direction, wherein the second rotational direction is opposite the first rotational direction.

11. The HEP system (20) of claim 9 or 10, wherein the planetary gear arrangement (54) includes a sun gear (70), a plurality of planet gears (72), a ring gear (76) and a planet gear carrier (74), and wherein the sun gear (70) is disposed for engagement with a shaft (60) of the accessory device.

12. The HEP system (20) of claim 11, wherein:
the ring gear (76) is rotationally fixed and the planet gear carrier (74) is engaged with a pinion gear (78) that is engaged with the drive gear (50), and wherein the drive gear (50) is engaged with the output shaft (52); or
the planet gear carrier (74) is rotationally fixed and the ring gear (76) is engaged with a pinion gear (78) that is engaged with the drive gear (50), and wherein the drive gear (50) is engaged with the output shaft (52).

13. A gearbox (26) for use in an aircraft hybrid-electric propulsion, HEP, system (20), the gearbox (26) comprising:
an input shaft (46);
an output shaft (52);
a drive gear (50);
a layshaft assembly (48) that includes a layshaft (68), a first layshaft gear (64), and a second layshaft gear (66), wherein the first layshaft gear (64) and the second layshaft gear (66) are attached to the layshaft (68), and the first layshaft gear (64) is engaged with the input shaft (46) and the second layshaft gear (66) is engaged with the drive gear (50);
an accessory device pad (58); and
a first planetary gear arrangement (54) engaged with the drive gear (50) and disposed for drive communication with an accessory device mounted on the accessory device pad (58).

14. The gearbox (26) of claim 13, wherein the gearbox (26) includes a second accessory device pad (58) and a second planetary gear arrangement (54), wherein the second planetary gear arrangement (54) is disposed to permit engagement with a second accessory device mounted to the second accessory device pad (58).

15. The gearbox (26) of claim 13 or 14, wherein the first planetary gear arrangement (54) includes a sun gear (70), a plurality of planet gears (72), a ring gear (76) and a planet gear carrier (74), and wherein:
the ring gear (76) is rotationally fixed and the planet gear carrier (74) is engaged with a pinion gear (78) that is engaged with the drive gear (50); or
the planet gear carrier (74) is rotationally fixed and the ring gear (76) is engaged with a pinion gear (78) that is engaged with the drive gear (50).
